# EUROPEAN PATENT APPLICATION

(11) **EP 2 793 411 A1**
(43) Date of publication of application: **22.10.2014**
(21) Application number: 13835906.2
(22) Date of filing: 05.09.2013
(51) Int. Cl.: H04B 10/075, H04B 10/25

(54) **APPARATUS AND METHOD FOR OPTICAL SPLITTER PORT RECOGNITION, AND METHOD AND APPARATUS FOR OPTICAL SPLITTER TEMPERATURE DETECTION**

(30) Priority: 05.09.2012 CN 201210324655; 05.09.2012 CN 201310049333
(71) Applicant: Huawei Technologies Co., Ltd., Shenzhen, Guangdong 518129 (CN)
(72) Inventor: QI, Biao, Shenzhen Guangdong 518129 (CN); GONG, Jianmin, Shenzhen Guangdong 518129 (CN); ZHOU, Libing, Shenzhen Guangdong 518129 (CN)
(74) Representative: Goddar, Heinz J.
(86) International application number: PCT/CN2013/083017
(87) International publication number: WO 2014/036959

(57) **Abstract**

The present invention provides an optical splitter and a system, including: an optical divider, a ribbon fiber, and tributary fibers, where the optical divider is configured to divide an input optical signal into at least two optical signals for output; one end of the ribbon fiber is connected to the optical divider, and the other end of the ribbon fiber is connected to the tributary fibers, where a grating array is disposed on the ribbon fiber; and the grating array includes at least two Bragg gratings, different Bragg gratings correspond to different tributary lines of the optical divider, and the number of Bragg gratings included in the grating array is the same as the number of optical signals output by the optical divider; which solves a problem that additional connection loss is increased because an existing splitter needs to be connected to each link fiber by using an optical connector, and thereby decreasing connection loss of an optical device.

## Description

### TECHNICAL FIELD

Embodiments of the present invention relate to the field of communications technologies, and in particular, to an apparatus and a method for recognizing an optical splitter port and a method and an apparatus for detecting a temperature of an optical splitter.

### BACKGROUND

As fiber network scale expands rapidly, passive optical network technologies gradually become a hotspot of optical access network technologies. To secure communications and improve availability of a fiber network, the following is required: in one aspect, mastering a running status of a fiber link in a timely manner and finding a deterioration trend in a timely manner for prevention; on another aspect, when an interruption occurs in a fiber link, making a quick response, perform accurate locating, and shortening a time period for looking for a fault.

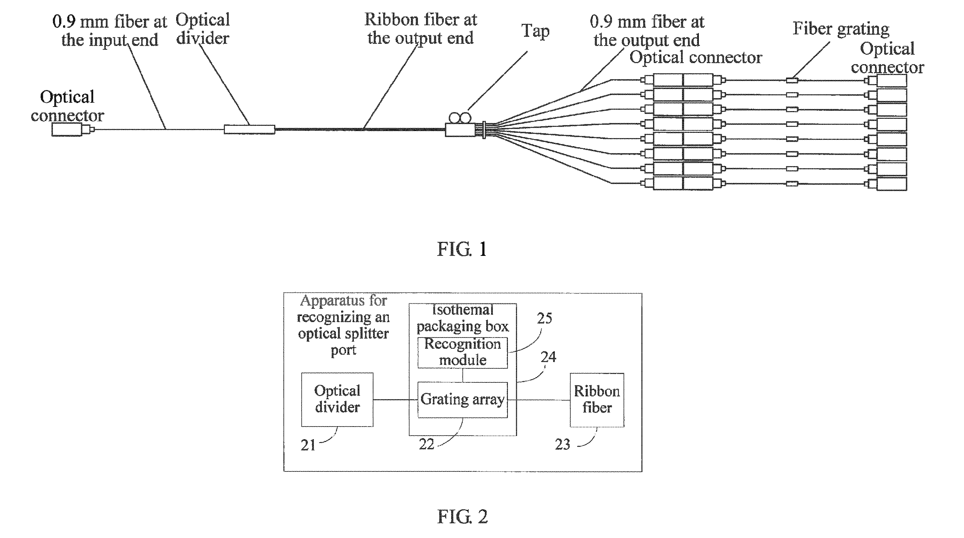

FIG 1 is a schematic structural diagram of an optical splitter in the prior art. At the end of a tap of an optical splitter, fiber Bragg gratings (FBG) of different characteristic wavelengths are separately connected by using optical connectors. When an optical time domain reflectometer (OTDR) with an adjustable wavelength emits a detecting light of a wavelength, the detecting light is reflected or transmitted by an FBG of a tributary corresponding to the wavelength, and a returned light is detected and recognized by the OTDR, thereby implementing identification and monitoring of a passive fiber link by a remote end.

Because an FBG is liable to be affected by a temperature change, when an ambient temperature changes, wavelengths of adjacent FBGs shown in FIG 1 are prone to overlap, tributaries with overlapped FBG wavelengths cannot be recognized, making the FBGs lose a function of identifying a passive fiber link. Therefore, temperature compensation is required for the FBGs, for example, packaging negative thermal expansion materials, so as to enable the FBGs to work at a fixed temperature. However, a long-term reliability of a device is relatively poor and additional cost is increased.

As shown in FIG 1, when an FBG is connected to each tributary of an optical tap of an optical splitter, the FBG needs to be connected to each fiber link through an optical connector, thereby increasing additional connection loss.

### SUMMARY

Embodiments of the present invention provide an optical splitter and a system, so as to solve the following problem: an existing optical splitter needs to be connected to each link fiber by using an optical connector, which increases additional connection loss.

According to a first aspect, an embodiment of the present invention provides an optical splitter, including: an optical divider, a ribbon fiber, and tributary fibers; where,
the optical divider is configured to divide an input optical signal into at least two optical signals for output;
one end of the ribbon fiber is connected to the optical divider, and the other end of the ribbon fiber is connected to the tributary fibers, where a grating array is disposed on the ribbon fiber;
the grating array is configured to separately perform filtering processing on each optical signal output by the optical divider and reflect optical signals of corresponding wavelengths; and
the grating array includes at least two Bragg gratings, different Bragg gratings correspond to different tributary lines of the optical divider, and the number of Bragg gratings included in the grating array is the same as the number of optical signals output by the optical divider.

In a first possible implementation manner of the first aspect, the optical splitter further includes a metal packaging box, where the grating array is packaged in the metal packaging box.
In a second possible implementation manner of the first aspect, the optical splitter further includes a metal packaging box, where the optical divider and the grating array are packaged in the metal packaging box.

With reference to the first aspect or the first possible implementation manner of the first aspect or the second possible implementation manner of the first aspect, in a third possible implementation manner, the optical splitter further includes a tap, and the other end of the ribbon fiber is connected to the tributary fibers by using the tap.

According to a second aspect, the present invention provides a system for recognizing an optical splitter port, where the system includes: an optical divider, a ribbon fiber, tributary fibers and a recognition module; where,
the optical divider is configured to divide an input optical signal into at least two optical signals for output;
one end of the ribbon fiber is connected to an optical splitter port of the optical divider, and the other end of the ribbon fiber is connected to the tributary fibers;
the grating array is disposed on the ribbon fiber on the optical splitter port of the optical divider, where the grating array is configured to separately perform filtering processing on each optical signal output by the optical divider and reflect optical signals of corresponding wavelengths;
the grating array includes at least two Bragg gratings, different Bragg gratings correspond to different optical splitter ports of the optical divider, and the number of Bragg gratings included in the grating array is the same as the number of optical signals output by the optical divider; and
the recognition module is configured to separately acquire a wavelength of an optical signal reflected by each Bragg grating in the grating array and, according to a correspondence between the wavelength of the optical signal reflected by each Bragg grating and each corresponding optical splitter port of the optical splitter, recognize each optical splitter port.

In a first possible implementation manner of the second aspect, the system further includes a metal packaging box, where the grating array is packaged in the metal packaging box.

With reference to the second aspect and the first possible implementation manner of the second aspect, in a second possible implementation manner, the system further includes a metal packaging box, where the optical divider and the grating array are packaged in the metal packaging box.

With reference to the second aspect or the first possible implementation manner of the second aspect or the second possible implementation manner of the second aspect, in a third possible implementation manner, the system further includes a tap, and the other end of the ribbon fiber is connected to the tributary fibers by using the tap.

According to a third aspect, the present invention provides an optical distribution network, configured to connect an optical line terminal and an optical network unit, where the optical distribution network includes the optical splitter in the first aspect, the first possible implementation manner of the first aspect, the second possible implementation manner of the first aspect and the third possible implementation manner of the first aspect.

According to a fourth aspect, the present invention provides a fiber communications system, including: an optical line terminal, an optical distribution network and an optical network unit, where the optical line terminal is connected to the optical network unit by using the optical distribution network, and the optical distribution network includes the optical splitter in the first aspect, the first possible implementation manner of the first aspect, the second possible implementation manner of the first aspect and the third possible implementation manner of the first aspect.

According to the optical splitter in the embodiments of the present invention, a grating array is disposed on a ribbon fiber of an optical splitter port. Each optical splitter port of an optical splitter can be rapidly recognized by recognizing a reference reflection wavelength corresponding to each grating in the grating array, thereby improving recognition efficiency. The grating array of the optical splitter in the embodiments of the present invention is integrated on the ribbon fiber and does not need to be connected to each link fiber device by using an optical connector, which may decrease connection loss.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an optical splitter in the prior art;
FIG 2 is a schematic structural diagram of an apparatus for recognizing an optical splitter port according to an embodiment of the present invention;
FIG 3 is a schematic structural diagram of a specific implementation manner of an apparatus for recognizing an optical splitter port according to the embodiment shown in FIG 2;
FIG 4 is a schematic structural diagram of still another specific implementation manner of an apparatus for recognizing an optical splitter port according to the embodiment shown in FIG. 2;
FIG 5 is a schematic structural diagram of still another specific implementation manner of an apparatus for recognizing an optical splitter port according to the embodiment shown in FIG 2;
FIG 6 is a schematic flowchart of a method for recognizing an optical splitter port according to another embodiment of the present invention;
FIG 7 is a schematic flow diagram of a method for detecting a temperature of an optical splitter according to another embodiment of the present invention;
FIG. 8 is a schematic structural diagram of an apparatus for detecting a temperature of an optical splitter according to another embodiment of the present invention; and
FIG 9 is a schematic structural diagram of a fiber communications system according to another embodiment of the present invention.

### DESCRIPTION OF EMBODIMENTS

To make the objectives, technical solutions, and advantages of the embodiments of the present invention clearer, the following clearly and describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Based on problems, of an existing optical splitter, that temperature compensation is required for an FBG, and additional cost is increased; and that an optical connector is required for a connection to each link fiber, and additional connection loss is increased, the embodiments of the present invention provide an optical splitter. With the optical splitter, when a temperature changes, an FBG can also work normally in a case in which temperature compensation is not required for the FBG, and the function of identifying a passive fiber link is not lost. When the FBG is connected to an optical splitter, no optical connector is required, which may decrease connection loss.

FIG. 2 is a schematic structural diagram of an apparatus for recognizing an optical splitter port according to an embodiment of the present invention, as shown in FIG. 2, the apparatus includes: an optical divider 21, a grating array 22, a ribbon fiber 23, an isothermal packaging box 24 and a recognition module 25, where
one end of the ribbon fiber 23 is connected to the optical divider 21, and the other end of the ribbon fiber 23 passes through the grating array 22; and it should be noted that, in a practical application, the other end of the ribbon fiber 23 passes through the grating array 22 to connect to a tap;
the grating array 22 is located in the isothermal packaging box 24;
the optical divider 21 is configured to divide an input light wave into at least two light waves for output;
the grating array 22 includes at least two gratings, and the number of gratings included in the grating array 22 is the same as the number of light waves output by the optical divider 21;
the grating array 22 is configured to separately perform filtering processing on each light wave output by the optical divider and reflect light waves of corresponding wavelengths;
it should be noted that, in this embodiment, a wavelength of a corresponding light wave separately reflected at a reference temperature by each grating in the grating array 22 and from each light wave output by the optical divider may be set as a reference reflection wavelength corresponding to each grating, and the reference reflection wavelength corresponding to each grating is set as an identifier of a corresponding optical splitter port of the optical splitter; and
the isothermal packaging box 24 is configured to make temperature distribution even in the isothermal packaging box when an ambient temperature changes.

It should be noted that, because temperature field distribution in an isothermal packaging box is even, wavelengths of light waves reflected by all gratings in a grating array shift with a temperature in a same direction and by a same value when an ambient temperature changes. A positive shift correlation between a wavelength of a light wave reflected by each grating in the grating array and the temperature can be acquired by means of an experiment and calculation. For example, a positive shift correlation between a wavelength of a light wave reflected by a Bragg grating and a temperature is 0.01 nm/°C. That is, when a current ambient temperature is 10°C higher than a reference temperature, a wavelength of a light wave currently reflected by the Bragg grating is 0. 1 nm greater than a reference reflection wavelength of the Bragg grating. It can be learnt that, an isothermal packaging box can ensure that no overlap phenomenon will occur on wavelengths of light waves reflected by adjacent gratings when an ambient temperature changes.

It should be noted that the foregoing reference temperature is generally a normal temperature. A value of a normal temperature varies with regions, and a normal temperature for an area of mainland China usually refers to 20°C.

It should be noted that the grating array may but is not limited to be implemented by using a Bragg grating array and the isothermal packaging box may but is not limited to be implemented by using a metal packaging box.

It should be noted that, to achieve the purpose of recognizing each optical splitter port of an optical splitter in the present invention, in an optional implementation manner of the present invention, a recognition module 25 may be integrated into an isothermal packaging box 24 and may be specifically configured to: separately acquire a wavelength of a corresponding light wave currently reflected by each grating in a grating array and acquire a current temperature value; according to a positive shift correlation between a reflection wavelength of each grating and a temperature, the acquired current temperature value, and the wavelength of the corresponding light wave currently reflected by each grating, acquire a reference reflection wavelength corresponding to each grating; and recognize each optical splitter port of the optical splitter according to a correspondence between the reference reflection wavelength corresponding to each grating and an identifier of a corresponding optical splitter port of the optical splitter.

It should be noted that the foregoing recognition module may also be a device independent of an isothermal packaging box is not limited in the present invention.

It should be noted that an optical splitter in this embodiment may include two or more than two grating arrays, each grating array includes at least two gratings, and the total number of gratings in each grating array is the same as the number of light waves output by the optical splitter.

It should be noted that an optical divider in this embodiment may be packaged with a grating array into a metal packaging box.

According to the optical splitter in this embodiment of the present invention, a grating array is disposed on a ribbon fiber on an optical splitter port of an optical divider. Each optical splitter port of an optical splitter can be rapidly recognized by recognizing a reference reflection wavelength corresponding to each grating in the grating array, thereby improving recognition efficiency.

In addition, the grating array of the optical splitter in this embodiment of the present invention is located in an isothermal packaging box. Because temperature distribution in the isothermal packaging box is even, wavelengths of corresponding light waves separately reflected by gratings in a grating array and from light waves output by the optical divider shift with a temperature in a same direction and by a same value, which can ensure that no overlap phenomenon occurs on wavelengths of light waves reflected by adjacent gratings when an ambient temperature changes, and can solve a problem that, cost is increased and long-term stability becomes poor, due to that an existing grating needs an apparatus with expensive temperature compensation such as packaging of negative thermal expansion materials. Therefore, the optical splitter in this embodiment can implement narrow-band and narrow-spacing allocation of high-density spectrum resources at a low cost and with a high efficiency simply by using a low-cost grating array with isothermal packaging.

In addition, a grating array of the optical splitter in this embodiment of the present invention is integrated on the ribbon fiber and does not need to be connected to each link fiber device by using an optical connector, which may decrease connection loss.

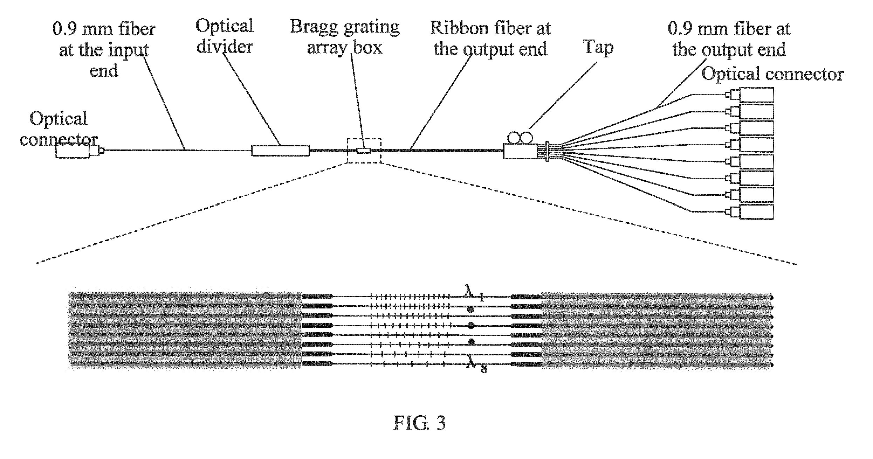

FIG. 3 is a schematic structural diagram of a specific implementation manner of an apparatus for recognizing an optical splitter port according to the embodiment shown in FIG. 2, as shown in FIG. 3, the following is specifically included: a Bragg grating array box, an optical divider, a ribbon fiber and a tap;
the Bragg grating array box is located on a ribbon fiber between the optical divider and the tap; one end of the ribbon fiber is connected to the optical divider and the other end is connected to the tap by using the Bragg grating array box; the Bragg grating array box includes a Bragg grating array and a metal packaging box and further includes a recognition module, where the recognition module and the Bragg grating array are integrated into the metal packaging box.

The optical divider in this embodiment can divide an input light wave into 8 light waves for output. Correspondingly, a Bragg grating array includes 8 Bragg gratings, which separately perform filtering processing on the 8 light waves output by the optical divider and reflect light waves of corresponding wavelengths.

In an optional implementation manner of the present invention, suppose that Bragg wavelengths reflected by the 8 Bragg gratings are: λ1=1625 nm, λ2=1626 nm, λ3=1627 nm, λ4=1628 nm, λ5=1629 nm, λ6=1630 nm, λ7=1631 nm, and λ8=1632 nm; because a unique mapping relationship exists between the Bragg grating array and the 1×8 optical divider, different Bragg gratings correspond to different tributary lines of the optical divider. According to the foregoing mapping relationship, a wavelength of a corresponding light wave reflected at a reference temperature by each Bragg grating may be set as an identifier of a corresponding tributary line (optical splitter port). Thus, the wavelength of the corresponding light wave separately reflected by each Bragg grating in the Bragg grating array and from each light wave output by the optical divider can be identified by using a recognition module, each optical splitter port of the optical splitter can be rapidly recognized, and recognition efficiency is improved.

In an optional implementation manner of the present invention, a Bragg grating array is packaged by using a metal packaging box outside, thereby avoiding individual packaging of each FBG, and reducing a packaging cost.

Because temperature field distribution in a metal packaging box is even, wavelengths of light waves reflected by a Bragg grating array shift with a temperature in a same direction and by a same value when an ambient temperature changes. An experiment and calculation show that a positive shift correlation between a wavelength of a light wave reflected by a Bragg grating and a temperature is 0.01 nm/°C. That is, a wavelength of a light wave currently reflected by the Bragg grating is 0. 1 nm greater than a reference reflection wavelength of the Bragg grating when a current ambient temperature is 10°C higher than a reference temperature. The reference reflection wavelength of the Bragg grating is the wavelength of the light wave reflected at the reference temperature by the Bragg grating.

Suppose that when a temperature of a Bragg grating array on an optical distribution network (ODN) is 10°C higher than a reference temperature, wavelengths of light waves currently reflected by the 8 Bragg gratings in the Bragg grating array in this embodiment are respectively: λ1=1625.1 nm, λ2=1626.1 nm, λ3=1627.1 nm, λ4=1628.1 nm, λ5=1629.1 nm, λ6=1630.1 nm, λ7=1631.1 nm, and λ8=1632.1 nm. It should be noted that the foregoing reference temperature is generally a normal temperature. A value of a normal temperature varies with regions, and a normal temperature for an area of mainland China usually refers to 20°C.

It can be learnt that, an optical splitter in this embodiment can ensure that no overlap phenomenon occurs on wavelengths of light waves reflected by adjacent gratings when an ambient temperature changes, which can solve a problem that, cost is increased and long-term stability becomes poor due to that an existing grating needs an apparatus with temperature compensation such as packaging of negative thermal expansion materials. Therefore, the optical splitter in this embodiment can implement narrow-band and narrow-spacing allocation of high-density spectrum resources at a low cost and with a high efficiency simply by using a low-cost grating array with isothermal packaging.

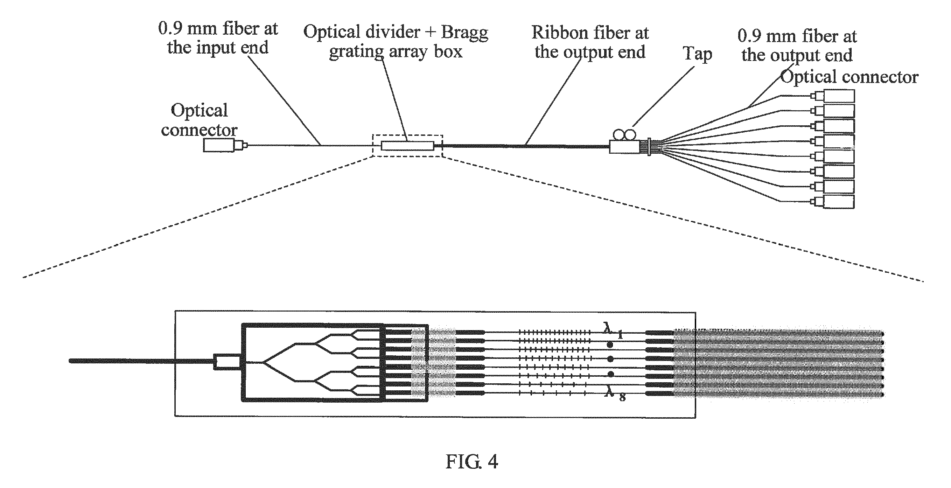

FIG. 4 is a schematic structural diagram of still another specific implementation manner of an apparatus for recognizing an optical splitter port according to the embodiment shown in FIG. 2, as shown in FIG 4, the following is specifically included: a Bragg grating array, an optical divider, a ribbon fiber and a tap, where
the Bragg grating array is disposed on the ribbon fiber, and the Bragg grating array, the optical divider and a recognition module are packaged in a same metal packaging box; and one end of the ribbon fiber is connected to the optical divider and the other end passes through the Bragg grating array and is connected to the tap.

The optical divider in this embodiment can divide an input light wave into 8 light waves for output. Correspondingly, the Bragg grating array includes 8 Bragg gratings, which separately perform filtering processing on the 8 light waves output by the optical divider and reflect light waves of corresponding wavelengths.

In an optional implementation manner of the present invention, suppose that Bragg wavelengths reflected by the 8 Bragg gratings are: λ1=1640.0 nm, λ2=1640.5 nm, λ3=1641.0 nm, λ4=1641.5 nm, λ5=1642.0 nm, λ6=1642.5 nm, λ7=1643.0 nm, and λ8=1643.5 nm; because a unique mapping relationship exists between the Bragg grating array and the 1×8 optical divider, different Bragg gratings correspond to different tributary lines of the optical divider. According to the foregoing mapping relationship, a wavelength of a corresponding light wave reflected at a reference temperature by each Bragg grating may be set as an identifier of a corresponding tributary line (optical splitter port). Thus, the wavelength of the corresponding light wave separately reflected by each Bragg grating in the Bragg grating array and from each light wave output by the optical divider can be identified by using a recognition module, each optical splitter port of the optical splitter can be rapidly recognized, and recognition efficiency is improved.

A Bragg grating array and an optical divider share one metal packaging box, thereby avoiding individual packaging of each Bragg grating and reducing a packaging cost.

Because temperature field distribution in a metal packaging box is even, wavelengths of light waves reflected by a Bragg grating array shift with a temperature in a same direction and by a same value when an ambient temperature changes. An experiment and a calculation show that, a positive shift correlation between a wavelength of a light wave reflected by a Bragg grating and a temperature is 0.01 nm/°C. That is, a wavelength of a light wave currently reflected by the Bragg grating is 0.1 nm less than a reference reflection wavelength of the Bragg grating when a current ambient temperature is 10°C lower than a reference temperature. The reference reflection wavelength of the Bragg grating is the wavelength of the light wave reflected at the reference temperature by the Bragg grating.

Suppose that a temperature of a Bragg grating array on an ODN network is 10°C lower than a reference temperature, wavelengths of light waves currently reflected by the 8 Bragg gratings in the Bragg grating array in this embodiment are respectively: λ1=1639.9 nm, λ2=1640.4 nm, λ3=1640.9 nm, λ4=1641.4 nm, λ5=1641.9 nm, λ6=1642.4 nm, λ7=1642.9 nm, and λ8=1643.4 nm.

It can be learnt that, an optical splitter in this embodiment can ensure that no overlap phenomenon occurs on wavelengths of light waves reflected by adjacent gratings when an ambient temperature changes. The optical splitter in this embodiment can implement narrow-band and narrow-spacing allocation of high-density spectrum resources at a low cost and with a high efficiency simply by using a low-cost grating array with isothermal packaging.

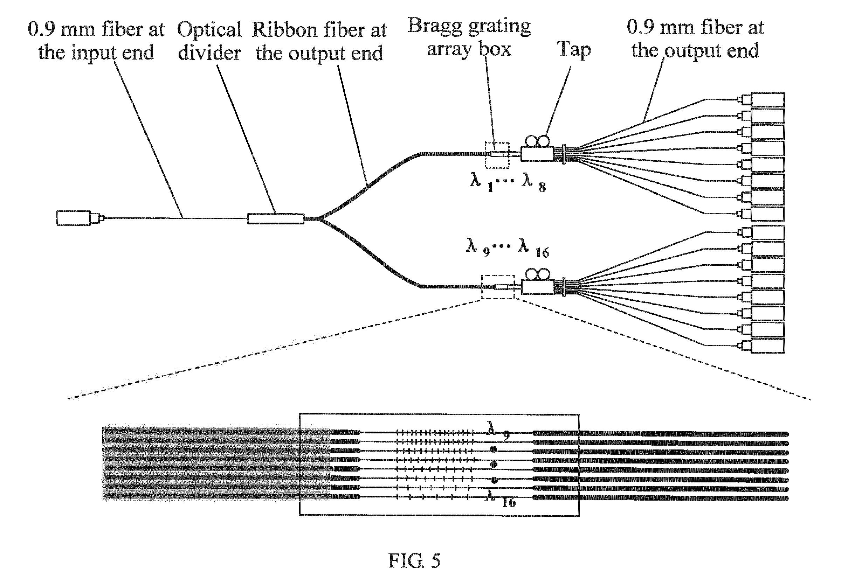

FIG. 5 is a schematic structural diagram of still another specific implementation manner of an apparatus for recognizing an optical splitter port according to the embodiment shown in FIG. 2, as shown in FIG 5, the following is specifically included: an optical divider, at least two Bragg grating array boxes, at least two ribbon fibers, and at least two taps;
each Bragg grating array box includes one Bragg grating array and one metal packaging box and further includes a recognition module, and the Bragg grating array and the recognition module may be integrated into the metal packaging box; and
each Bragg grating array box is located on a ribbon fiber between the optical divider and the tap, one end of the ribbon fiber is connected to the optical divider and the other end is connected to the tap by using the Bragg grating array box.

The optical divider in this embodiment can divide an input light wave into 16 light waves for output to two Bragg grating arrays. Correspondingly, each Bragg grating array includes 8 Bragg gratings, which separately perform filtering processing on the 8 light waves output by the optical divider and reflect light waves of corresponding wavelengths.

In an optional implementation manner of the present invention, suppose that Bragg wavelengths reflected by 16 Bragg gratings are: λ1=1650.0 nm, λ2=1650.5 nm, λ3=1651.0 nm, ..., λ16=1657.5 nm; because a unique mapping relationship exists between the Bragg grating arrays and the 1×16 optical divider, and different Bragg gratings correspond to different tributary lines of the optical divider. According to the foregoing mapping relationship, a wavelength of a corresponding light wave reflected at a reference temperature by each Bragg grating may be set as an identifier of a corresponding tributary line (optical splitter port). Thus, the wavelength of the corresponding light wave separately reflected by each Bragg grating in the Bragg grating array and from each light wave output by the optical divider can be identified by using a recognition module, each optical splitter port of the optical splitter can be rapidly recognized, and recognition efficiency is improved.

In an optional implementation manner of the present invention, each Bragg grating array is packaged by using a metal packaging box outside, thereby avoiding individual packaging of each Bragg grating and reducing a packaging cost.

Because temperature field distribution in a metal packaging box is even, wavelengths of light waves reflected by a Bragg grating array shift with a temperature in a same direction and by a same value when an ambient temperature changes. An experiment and a calculation show that a positive shift correlation between a wavelength of a light wave reflected by a Bragg grating and a temperature is 0.01 nm/°C. That is, a wavelength of a light wave currently reflected by the Bragg grating is 0.01 nm greater than a reference reflection wavelength of the Bragg grating when a current ambient temperature is 10°C higher than a reference temperature. The reference reflection wavelength of the Bragg grating is the wavelength of the light wave reflected at the reference temperature by the Bragg grating.

Suppose that when a temperature of a Bragg grating array on an optical distribution network (ODN) is 20°C higher than a reference temperature, wavelengths of light waves currently reflected by the 16 Bragg gratings in the two Bragg grating arrays in this embodiment are respectively: λ1=1650.2 nm, λ2=1650.7 nm, λ3=1651.2 nm, ..., λ16=1657.7 nm.

It can be learnt that, an optical splitter in this embodiment can ensure that no overlap phenomenon occurs on wavelengths of light waves reflected by adjacent gratings when an ambient temperature changes. Therefore, the optical splitter in this embodiment can implement narrow-band and narrow-spacing allocation of high-density spectrum resources at a low cost and with a high efficiency simply by using a low-cost grating array with isothermal packaging.

It should be noted that, in the foregoing embodiment, both ends of a Bragg grating array box are of a common ribbon fiber structure and the Bragg grating array box may be packaged by using an existing standard optical divider packaging technology. Thus, manufacturing an optical splitter with an optical divider port that has a Bragg grating array can be implemented without a need of transforming the existing optical divider packaging technology.

Because a Bragg grating array box is added on a ribbon fiber of an original optical divider, a length of a device is not increased while an identification function is added. A Bragg grating array box is integrated onto a ribbon fiber without a need of an additional optical connector. Thus, connection loss can be reduced, a human error in connecting a Bragg grating array box and an optical divider during site construction is avoided, and installation difficulty can be decreased.

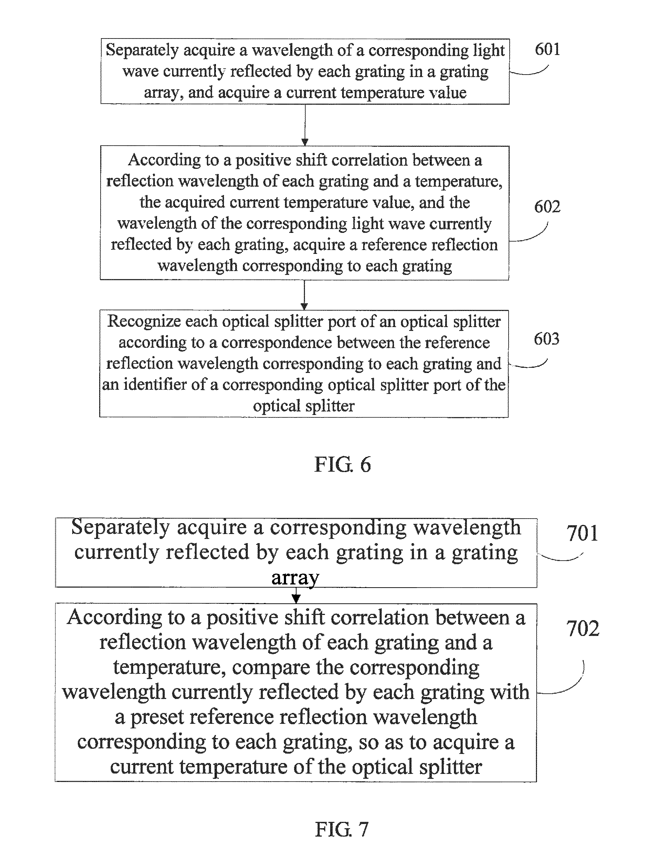

It should be noted that, based on an apparatus for recognizing an optical splitter port in the foregoing embodiment, a method for recognizing an optical splitter port is provided in another embodiment of the present invention. FIG. 6 is a schematic flowchart of a method for recognizing an optical splitter port according to another embodiment of the present invention. As shown in FIG. 6, the method specifically includes:
601. Separately acquire a wavelength of a corresponding light wave currently reflected by each grating in a grating array, and acquire a current temperature value.
602. According to a positive shift correlation between a reflection wavelength of each grating and a temperature, the acquired current temperature value, and the wavelength of the corresponding light wave currently reflected by each grating, acquire a reference reflection wavelength corresponding to each grating.
603. Recognize each optical splitter port of an optical splitter according to a correspondence between the reference reflection wavelength corresponding to each grating and an identifier of a corresponding optical splitter port of the optical splitter.

In an optional implementation manner of the present invention, before the recognizing each optical splitter port of the optical splitter according to a correspondence between the reference reflection wavelength corresponding to each grating and an identifier of a corresponding optical splitter port of the optical splitter, the method includes:
presetting a wavelength of a corresponding light wave, which is reflected at a reference temperature by each grating and from each light wave output by the optical divider, to be the reference reflection wavelength corresponding to each grating; and
setting the reference reflection wavelength corresponding to each grating to be the identifier of the corresponding optical splitter port of the optical splitter.

It should be noted that, for the positive shift correlation between the reflection wavelengths of the foregoing gratings and the temperature, reference may be made to relevant content in embodiments shown in FIG. 3 - FIG. 5 and details are not described again.

In this embodiment of the present invention, a wavelength of a corresponding light wave reflected at a reference temperature by each grating may be set as an identifier of a corresponding tributary line (optical splitter port) of an optical splitter. In this way, by acquiring a corresponding wavelength currently reflected by each grating in a grating array and a current ambient temperature, according to a positive shift correlation between a reflection wavelength of each grating and a temperature, a reference reflection wavelength corresponding to each grating can be acquired. Thus, each optical splitter port of the optical splitter can be rapidly recognized, and recognition efficiency is improved.

It should be noted that, based on an apparatus for recognizing an optical splitter port in the foregoing embodiment, a method for detecting a temperature of an optical splitter is provided in another embodiment of the present invention. FIG. 7 is a schematic flowchart of a method for detecting a temperature of an optical splitter according to another embodiment of the present invention, as shown in FIG 7, the following is specifically included:
701. Separately acquire a corresponding wavelength currently reflected by each grating in a grating array.
702. According to a positive shift correlation between a reflection wavelength of each grating and a temperature, compare the corresponding wavelength currently reflected by each grating with a preset reference reflection wavelength corresponding to each grating, so as to acquire a current temperature of the optical splitter.

It should be noted that the reference reflection wavelength corresponding to each grating is a wavelength of a corresponding light wave reflected at a reference temperature by each grating and from each light wave output by the optical divider.

It should be noted that, for the positive shift correlation between the reflection wavelengths of the foregoing gratings and the temperature, reference may be made to relevant content in embodiments shown in FIG. 3 - FIG. 5 and details are not described again.

In this embodiment of the present invention, by acquiring a corresponding wavelength currently reflected by each grating in the grating array and a current ambient temperature, and according to a positive shift correlation between the reflection wavelength of the grating and the temperature, the current temperature of the optical splitter is calculated. Therefore, a function of remote temperature monitoring can be implemented by applying the optical splitter in this embodiment.

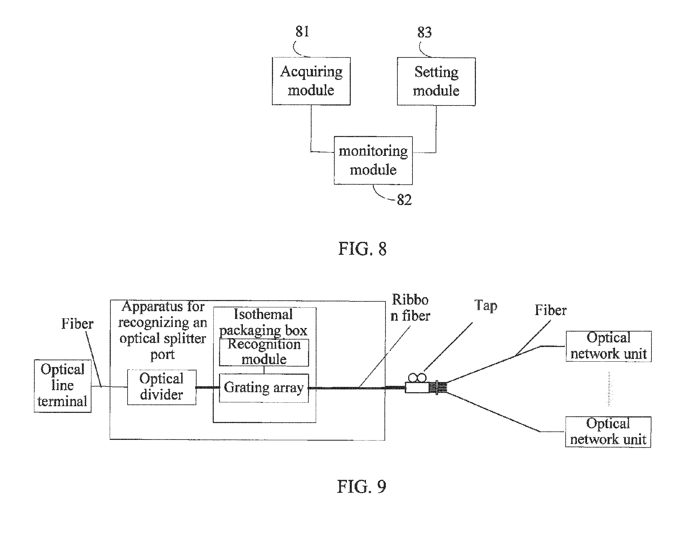

FIG. 8 is a schematic structural diagram of an apparatus for detecting a temperature of an optical splitter according to another embodiment of the present invention. As shown in FIG. 8, the apparatus includes:
an acquiring module 81, configured to separately acquire a wavelength of a corresponding light wave currently reflected by each grating in a grating array;
a monitoring module 82, connected to the acquiring module 81, and configured to, based on the wavelength, which is acquired by the acquiring module, of the corresponding light wave currently reflected by each grating in the grating array, according to a positive shift correlation between a reflection wavelength of each grating and a temperature, compare the wavelength of the corresponding light wave currently reflected by each grating with a preset reference reflection wavelength corresponding to each grating, so as to acquire a current temperature of the optical splitter; and
the grating array is located in an isothermal packaging box, and the isothermal packaging enables temperature distribution in the isothermal packaging box to be even when an ambient temperature changes.

In an optional implementation manner of the present invention, the apparatus further includes:
a setting module 83, connected to the monitoring module 82, and configured to preset a wavelength of a corresponding light wave, which is reflected at a reference temperature by each grating and from each light wave output by the optical divider, to be the reference reflection wavelength corresponding to each grating; and
the setting module 83 is capable of sending the reference reflection wavelength corresponding to each grating to the monitoring module 82, so that, based on the wavelength, which is acquired by the acquiring module 81, of the corresponding light wave currently reflected by each grating in the grating array, according to the positive shift correlation between the reflection wavelength of each grating and the temperature, the monitoring module 82 compares the wavelength of the corresponding light wave currently reflected by each grating with the preset reference reflection wavelength corresponding to each grating, so as to acquire the current temperature of the optical splitter.

It should be noted that, in this embodiment, the apparatus for detecting a temperature of an optical splitter may be integrated into an isothermal packaging box, and may also be a device independent of an isothermal packaging box, and is not limited in this present invention.

In this embodiment of the present invention, by acquiring a corresponding wavelength currently reflected by each grating in a grating array and a current ambient temperature, and according to a positive shift correspondence between a reflection wavelength of a grating and a temperature, a current temperature of an optical splitter may be calculated. Therefore, a function of remote temperature monitoring can be implemented by applying the optical splitter in this embodiment.

Based on an apparatus for recognizing an optical splitter port according to the foregoing embodiment, another embodiment of the present invention provides an optical distribution network, including: the apparatus for recognizing an optical splitter port according to the embodiment shown in any one of the FIG. 2 - FIG. 5. For relevant description of the apparatus for recognizing an optical splitter port, refer to relevant content in the embodiment shown in any one of FIG. 2 - FIG. 5. Details are not repeatedly described.

Based on an apparatus for recognizing an optical splitter port according to the foregoing embodiment, another embodiment of the present invention provides a fiber communications system. FIG. 9 is a schematic structural diagram of a fiber communications system provided by another embodiment of the present invention. As shown in FIG. 9, at least an optical line terminal and an optical network unit are included, and the optical line terminal is connected to the optical network unit by using an optical distribution network. The optical distribution network includes: the apparatus for recognizing an optical splitter port according to the embodiment shown in any one of the FIG. 2 - FIG. 5. For relevant description of an apparatus for recognizing an optical splitter port, refer to relevant content in the embodiment shown in any one of FIG. 2 - FIG 5. Details are not repeatedly described.

In an optional implementation manner of the present invention, the optical distribution network further includes: the apparatus for detecting a temperature of an optical splitter in the embodiment shown in FIG 8. For relevant description of an apparatus for detecting a temperature of an optical splitter, refer to relevant content in the embodiment shown in FIG 8. Details are not repeatedly described.

Finally, it should be noted that the foregoing embodiments are merely intended for describing the technical solutions of the present invention and not limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

According to a first aspect, the embodiments of the present invention provide an optical splitter, including: an optical divider, a ribbon fiber, and a tributary fiber; where,
the optical divider is configured to divide an input optical signal into at least two channels of optical signals for output;
one end of the ribbon fiber is connected to the optical divider, and the other end of the ribbon fiber is connected to the tributary fiber, where a grating array is placed on the ribbon fiber;
the grating array is configured to separately perform filtering processing on each channel of optical signal output by the optical divider and reflect an optical signal of a corresponding wavelength; and
the grating array includes at least two Bragg gratings, different Bragg gratings correspond to different tributary lines of the optical divider, and the number of Bragg gratings included in the grating array is the same as the number of channels of optical signals output by the optical divider.

In a first possible implementation manner of the first aspect, the optical splitter further includes a metal packaging box. The grating array is packaged in the metal packaging box.

In a second possible implementation manner of the first aspect, the optical splitter further includes a metal packaging box. The optical divider and the grating array are packaged in the metal packaging box.

With reference to the first aspect, the first possible implementation manner of the first aspect or the second possible implementation manner of the first aspect, in a third possible implementation manner, the optical splitter further includes a tap, and the other end of the ribbon fiber is connected to the tributary fiber through the tap.

According to a second aspect, the present invention provides a system for recognizing an optical splitter port, where the system includes: an optical divider, a ribbon fiber, a tributary fiber and a recognition module; where,
the optical divider is configured to divide an input optical signal into at least two channels of optical signals for output;
one end of the ribbon fiber is connected to an optical splitter port of the optical divider, and the other end of the ribbon fiber is connected to the tributary fiber;
the grating array is placed on the ribbon fiber on the optical splitter port of the optical divider, where the grating array is configured to separately perform filtering processing on each channel of optical signal output by the optical divider and reflect an optical signal of a corresponding wavelength;
the grating array includes at least two Bragg gratings, different Bragg gratings correspond to different optical splitter ports of the optical divider, and the number of Bragg gratings included in the grating array is the same as the number of channels of optical signals output by the optical divider; and
the recognition module is configured to separately acquire a wavelength of an optical signal reflected by each Bragg grating in the grating array and, according to a correspondence between the wavelength of the optical signal reflected by each Bragg grating and each optical splitter port of the optical splitter, recognize each optical splitter port.

In a first possible implementation manner of the second aspect, the system further includes a metal packaging box. The grating array is packaged in the metal packaging box.

With reference to the second aspect and the first possible implementation manner of the second aspect, in a second possible implementation manner, the system further includes a metal packaging box. The optical divider and the grating array are packaged in the metal packaging box.

With reference to the second aspect, the first possible implementation manner of the second aspect or the second possible implementation manner of the second aspect, in a third possible implementation manner, the system further includes a tap, and the other end of the ribbon fiber is connected to the tributary fiber through the tap.

According to a third aspect, the present invention provides an optical distribution network, configured to connect an optical line terminal and an optical network unit. The optical distribution network includes the optical splitter in the first aspect, the first possible implementation manner of the first aspect, the second possible implementation manner of the first aspect and the third possible implementation manner of the first aspect.

According to a fourth aspect, the present invention provides a fiber communication system, including: an optical line terminal, an optical distribution network and an optical network unit. The optical line terminal is connected to the optical network unit by using the optical distribution network. The optical distribution network includes the optical splitter in the first aspect, the first possible implementation manner of the first aspect, the second possible implementation manner of the first aspect and the third possible implementation manner of the first aspect.

According to the optical splitter in the embodiments of the present invention, a grating array is placed on a ribbon fiber on an optical splitter port. Each optical splitter port of an optical splitter can be recognized rapidly by recognizing a reference reflection wavelength corresponding to each grating in the grating array, thereby improving recognition efficiency. A grating array of the optical splitter in the embodiments of the present invention is integrated on the ribbon fiber and does not need to be connected to each link fiber device through an optical connector, and therefore, connection loss may be decreased.

## Claims

1. An optical splitter, comprising: an optical divider, a ribbon fiber and tributary fibers; wherein,
the optical divider is configured to divide an input optical signal into at least two optical signals for output;
one end of the ribbon fiber is connected to the optical divider, and the other end of the ribbon fiber is connected to the tributary fibers, wherein a grating array is disposed on the ribbon fiber;
the grating array is configured to separately perform filtering processing on each optical signal output by the optical divider and reflect optical signals of corresponding wavelengths; and
the grating array includes at least two Bragg gratings, different Bragg gratings correspond to different tributary lines of the optical divider, and the number of Bragg gratings included in the grating array is the same as the number of optical signals output by the optical divider.

2. The optical splitter according to claim 1, wherein the optical splitter further comprises a metal packaging box and the grating array is packaged in the metal packaging box.

3. The optical splitter according to claim 1, wherein the optical splitter further comprises a metal packaging box, and the optical divider and the grating array are packaged in the metal packaging box.

4. The optical splitter according to any one of claims 1 to 3, wherein the optical splitter further comprises a tap, and the other end of the ribbon fiber is connected to the tributary fibers by using the tap.

5. A system for recognizing an optical splitter port, wherein the system comprises:
an optical divider, a ribbon fiber, tributary fibers and a recognition module; wherein,
the optical divider is configured to divide an input optical signal into at least two optical signals for output;
one end of the ribbon fiber is connected to an optical splitter port of the optical divider, and the other end of the ribbon fiber is connected to the tributary fibers;
the grating array is disposed on the ribbon fiber on the optical splitter port of the optical divider, wherein the grating array is configured to separately perform filtering processing on each optical signal output by the optical divider and reflect optical signals of corresponding wavelengths;
the grating array includes at least two Bragg gratings, different Bragg gratings correspond to different optical splitter ports of the optical divider, and the number of Bragg gratings included in the grating array is the same as the number of optical signals output by the optical divider; and
the recognition module is configured to separately acquire a wavelength of an optical signal reflected by each Bragg grating in the grating array and, according to a correspondence between the wavelength of the optical signal reflected by each Bragg grating and each corresponding optical splitter port of the optical splitter, recognize each optical splitter port.

6. The system according to claim 5, wherein the system further comprises a metal packaging box, and the grating array is packaged in the metal packaging box.

7. The system according to claim 5, wherein the system further comprises a metal packaging box, and the optical divider and the grating array are packaged in the metal packaging box.

8. The system according to any one of claims 5 to 6, wherein the system further comprises a tap, and the other end of the ribbon fiber is connected to the tributary fibers by using the tap.

9. An optical distribution network, configured to connect an optical line terminal and an optical network unit, wherein the optical distribution network comprises the optical splitter according to any one of claims 1 to 4.

10. A fiber communications system, comprising: an optical line terminal, an optical distribution network and an optical network unit, wherein the optical line terminal is connected to the optical network unit by using the optical distribution network, and the optical distribution network comprises the optical splitter according to any one of claims 1 to 4.
